# EUROPEAN PATENT APPLICATION

(11) **EP 4 513 665 A1**
(43) Date of publication of application: **26.02.2025**
(21) Application number: 22947560.3
(22) Date of filing: 02.08.2022
(51) Int. Cl.: H01M 50/627, H01M 50/636, H01M 50/645

(54) **END COVER, END COVER ASSEMBLY, BATTERY CELL, BATTERY, AND ELECTRIC DEVICE**

(30) Priority: 20.06.2022 CN 202221530904 U
(71) Applicant: Contemporary Amperex Technology Co., Limited, Ningde, Fujian 352100 (CN)
(72) Inventor: SHANG, Zhitong, Ningde, Fujian 352100 (CN); WEN, Yaoling, Ningde, Fujian 352100 (CN)
(74) Representative: Gong, Jinping
(86) International application number: PCT/CN2022/109650
(87) International publication number: WO 2023/245819

(57) **Abstract**

This application relates to an end cover (21a), an end cover assembly (21), a battery cell (20), a battery (100), and an electric apparatus. The end cover includes a cover body (a1), the cover body (a1) having an electrolyte injection hole (k) running through two sides in a thickness direction (F) of the cover body, the electrolyte injection hole (k) including a first hole section (k1) and a second hole section (k2) that are opened top-down in the thickness direction (F) of the cover body (a1), and the first hole section (k1) and the second hole section (k2) being connected at two ends in close proximity to each other. The first hole section (k1) is configured to accommodate an electrolyte injection nozzle, at least a part of a hole wall fits with an outer wall of the electrolyte injection nozzle (400) to form an overflow prevention zone, and the overflow prevention zone is located above an electrolyte injection port (403) in the electrolyte injection nozzle (400).

## Description

### CROSS-REFERENCE TO RELATED APPLICATIONS

This application refers to Chinese Patent Application No. 2022215309041, filed on June 20, 2022 and entitled "END COVER, END COVER ASSEMBLY, BATTERY CELL, BATTERY, AND ELECTRIC APPARATUS", which is incorporated herein by reference in its entirety.

### TECHNICAL FIELD

This application relates to the field of battery manufacturing technologies, and in particular, to an end cover, an end cover assembly, a battery cell, a battery, and an electric apparatus.

### BACKGROUND

Energy saving and emission reduction are crucial to the sustainable development of the automobile industry. Electric vehicles, with their advantages in energy conservation and emission reduction, have become an important part of sustainable development of the automobile industry. For electric vehicles, battery technology is an important factor in connection with their development.

In the battery technologies, for ease of injection of the electrolyte into the battery cell, an electrolyte injection hole is typically opened top-down in the end cover of the battery cell, and then the electrolyte injection hole is sealed with a sealing peg after the electrolyte is injected. Existing batteries have the problem of low reliability of sealing of the electrolyte injection hole.

### SUMMARY

In view of the preceding problem, this application provides an end cover, an end cover assembly, a battery cell, a battery, and an electric apparatus, so as to solve the problem of low reliability of sealing of the electrolyte injection hole.

According to a first aspect, this application provides an end cover applied to a battery cell, where the end cover includes a cover body, the cover body having an electrolyte injection hole running through two sides in a thickness direction of the cover body, the electrolyte injection hole including a first hole section and a second hole section, the first hole section and the second hole section being opened top-down in the thickness direction of the cover body, and the first hole section and the second hole section being connected at two ends in close proximity to each other; where the first hole section is configured to accommodate an electrolyte injection nozzle, at least a part of a hole wall fits with an outer wall of the electrolyte injection nozzle to form an overflow prevention zone, and the overflow prevention zone is located above an electrolyte injection port in the electrolyte injection nozzle.

In the technical solution of the embodiments of this application, an electrolyte flowing out of the electrolyte injection nozzle is fully blocked by the overflow prevention zone and does not overflow outside the overflow prevention zone, thereby enabling all of the electrolyte flowing out of the electrolyte injection nozzle to flow smoothly to the interior of the battery cell through the second hole section without remaining in the electrolyte injection hole. In this way, welding defects at the weld of a sealing peg due to gasification of the electrolyte remaining in the electrolyte injection hole can be avoided, and the problem of reduced reliability of sealing of the electrolyte injection hole caused by the welding defects can be avoided.

In some embodiments, the hole wall of the first hole section fully fits with the outer wall of the electrolyte injection nozzle, and the electrolyte injection port of the electrolyte injection nozzle extends into the second hole section. In this case, the overflow prevention zone formed by the first hole section and the electrolyte injection nozzle is relatively large, thereby providing a good overflow prevention effect. Moreover, the electrolyte injection port of the electrolyte injection nozzle directly extends into the second hole section, and the electrolyte discharged from the electrolyte injection port directly enters into the second hole section, which can shorten a distance of the electrolyte entering into the battery cell, and can also avoid the electrolyte remaining on the hole wall of the first hole section.

In some embodiments, hole diameters of the first hole section gradually decrease from top to bottom, an end of the second hole section connected to the first hole section is a first junction end, and a hole diameter of the first junction end is equal to or greater than a minimum hole diameter of the first hole section. In this case, when the hole diameters of the first hole section gradually decrease from top to bottom, no circuitous structure is formed, the electrolyte can smoothly flow downward under self-weight, and the electrolyte flowing from the first hole section to the second hole section can flow directly toward the interior of the battery cell, which can reduce the probability of the electrolyte flowing along the hole wall of the second hole section and improve the injection efficiency of the electrolyte.

In some embodiments, the electrolyte injection hole further includes a third hole section, and the first hole section is connected between the third hole section and the second hole section. An end of the third hole section connected to the first hole section is a second junction end, and a hole diameter of the second junction end is equal to or greater than a maximum hole diameter of the first hole section. In this case, when the electrolyte injection hole is sealed for the second time, the second sealing member can be accommodated in the third hole section, such that the second sealing member can be avoided to be exposed to the outside of the cover body, which is unsightly and easy to cause scratches to the outside objects.

In some embodiments, an included angle between the hole wall of the first hole section and the thickness direction of the cover body is a first included angle α, where 0°≤α≤45°. In this case, the hole wall of the first hole section is in an inclined straight wall, which is convenient for processing. Meanwhile, the first included angle α is in the range of 0° to 45°, and the hole wall of the first hole section has less resistance to the electrolyte, which facilitates the electrolyte entering into the first hole section to flow smoothly to the second hole section under self-weight, and avoids the electrolyte sticking to the hole wall of the first hole section.

In some embodiments, the cover body includes a cover portion and an electrolyte injection platform, where the cover portion has a constructional surface, the constructional surface faces away from the interior of the battery cell, the electrolyte injection platform protrudes from the constructional surface, and the electrolyte injection hole runs through the cover portion and the electrolyte injection platform. In this case, the electrolyte injection platform protrudes from the cover portion, which not only can extend a length of the electrolyte injection hole, but also increases a mating area between the first sealing member and the electrolyte injection hole, improving the effectiveness of the primary sealing as well as the stability of the installation of the first sealing member; and in addition, the second sealing member and the electrolyte injection platform are in a bendable contact to form a circuitous path, improving the reliability of sealing and sealing effect of the electrolyte injection hole.

In some embodiments, the electrolyte injection platform has a peripheral side wall, where the peripheral side wall surrounds an axial direction of the electrolyte injection hole, and the peripheral side wall is constructed with a rolled-edge groove recessed toward the electrolyte injection hole. In this case, the second sealing member can be hermetically connected to a groove wall of the rolled-edge groove, a part of the peripheral side wall, and all of the end wall, greatly increasing a sealing area between the electrolyte injection platform and the second sealing member; and the rolled-edge groove, the peripheral side wall, and the end wall form a circuitous route, improving the sealing effect of the second sealing member. Moreover, the provision of the rolled-edge groove can also enhance the fixation between the second sealing member and the electrolyte injection platform.

In some embodiments, the cover portion is constructed with an avoidance groove, where the avoidance groove is recessed toward the interior of the battery cell, and a bottom surface of the avoidance groove serves as the constructional surface. The provision of the avoidance groove may reduce the protruding height of the electrolyte injection platform or even make the electrolyte injection platform not protrude, so as to reduce the influence of the electrolyte injection platform on the outside, and also to avoid the electrolyte injection platform from being damaged by the outside. In addition, during bending the second sealing member described below, the avoidance groove can provide a larger operating space.

In some embodiments, a depth of recess of the rolled-edge groove is a first dimension D1, a width of the rolled-edge groove in the thickness direction is a second dimension D2, a side wall of the avoidance groove opposite a groove bottom of the rolled-edge groove is a first side wall, and in a direction perpendicular to the thickness direction, a distance between the groove bottom of the rolled-edge groove and the first side wall is a third dimension D3; where D1≥0.5 mm, D2≥0.5 mm, 2≥D1/D2≥0.5, and D3≥3D1. It has been demonstrated through experiments that when the first dimension D1, the second dimension D2, and the third dimension D3 are in the foregoing ranges, there is more space available for performing an edge rolling operation when edge rolling processing is performed on the second sealing member, and it is convenient to perform edge rolling processing on the second sealing member.

In some embodiments, the end cover further includes a baffle, where the baffle is disposed on a side of the cover body facing the interior of the battery cell and blocks a flow path of an electrolyte flowing from the electrolyte injection hole to the interior of the battery cell. In this case, the baffle can avoid the fast-flowing electrolyte directly impacting on an electrode assembly and causing damage to the electrode assembly.

According to a second aspect, this application provides an end cover assembly applied to a battery cell, where the end cover assembly includes a first sealing member, a second sealing member, and the end cover provided in any one of the foregoing embodiments. The first sealing member is disposed inside the electrolyte injection hole and seals the first hole section and the second hole section; and the second sealing member covers a side of the first sealing member facing away from the interior of the battery cell and is hermetically connected to the cover body.

In the technical solution of this application, because the electrolyte injection hole is constructed to form a structure that allows the electrolyte to flow into the battery cell without obstruction, the electrolyte basically does not remain in the electrolyte injection hole. In this way, when the electrolyte injection hole is sealed for the second time, no welding defect is caused due to the gasified electrolyte running through a weld pool during welding the second sealing member, and thus the problem of reduced reliability of sealing of the electrolyte injection hole caused by welding defects can be avoided.

In some embodiments, the cover body includes a cover portion and an electrolyte injection platform, where the cover portion has a constructional surface, the constructional surface faces away from the interior of the battery cell, the electrolyte injection platform protrudes from the constructional surface, and the electrolyte injection hole runs through the cover portion and the electrolyte injection hole. The second sealing member includes a first sealing portion and a second sealing portion that are interconnected, where the first sealing portion covers the side the first sealing member facing away from the interior of the battery cell, and the second sealing portion is bent relative to the first sealing portion toward the interior of the battery cell and is hermetically connected to a peripheral side wall of the electrolyte injection platform. In this way, the second sealing member is sealed via the first sealing portion and the second sealing portion for the second time, with a large sealing area and good sealing effect. In addition, the first sealing portion and the second sealing portion are bent to form a circuitous sealing path, which further improves the sealing effect.

In some embodiments, the peripheral side wall surrounds an axial direction of the electrolyte injection hole, and the peripheral side wall is constructed with a rolled-edge groove recessed toward the electrolyte injection hole. The second sealing portion includes a first rolled-edge section and a second rolled-edge section that are interconnected, where the first rolled-edge section is connected to the first sealing portion and bent relative to the first sealing portion toward the interior of the battery cell, the first rolled-edge section is hermetically connected to the peripheral side wall of the electrolyte injection platform, and the second rolled-edge section is bent relative to the first rolled-edge section toward the electrolyte injection hole and is hermetically connected to the rolled-edge groove. In this case, the second sealing member can be hermetically connected to a groove wall of the rolled-edge groove, a part of the peripheral side wall, and all of the end wall, greatly increasing a sealing area between the electrolyte injection platform and the second sealing member; and the rolled-edge groove, the peripheral side wall, and the end wall form a circuitous route, improving the sealing effect of the second sealing member. Moreover, a hook-like structure including the first sealing portion, the first rolled-edge section, and the second rolled-edge section can further enhance the fixation between the second sealing member and the electrolyte injection platform.

In some embodiments, the second sealing member includes a hot melt layer and a thermal conductive layer that are stacked, where the hot melt layer is located between the thermal conductive layer and the cover body, and the hot melt layer is thermally meltable to hermetically connect the thermal conductive layer and the cover body. In this case, when the hot melt layer is used to bond the thermal conductive layer and the electrolyte injection platform (and/or the first sealing member), the gasification of the electrolyte can be mitigated or even avoided because a hot melt temperature is much lower than a high temperature generated by welding, thereby avoiding the problem of reducing the bonding strength and affecting the sealing effect due to the gasified electrolyte running through the hot melt layer.

In some embodiments, the first sealing member includes a main body portion and a positioning portion that are close to each other in the thickness direction, where the main body portion is hermetically connected to the inside of the electrolyte injection hole, and the positioning portion is located outside the electrolyte injection hole and lapped over a surface of the cover body facing away from the interior of the battery cell. The second sealing member hermetically covers the positioning portion. In this way, whether the first sealing member is installed well or not can be determined based on whether the positioning portion is lapped over the cover body, making the installation of the first sealing member easier.

In some embodiments, the first sealing member further includes a limiting portion located outside the electrolyte injection hole, the main body portion is connected between the limiting portion and the positioning portion, and the limiting portion abuts against a surface of the cover body facing the interior of the battery cell. When the first sealing member is installed well, the positioning portion and limiting portion of the first sealing member are used to limit the first sealing member to the cover body, which can effectively prevent the first sealing member from coming off.

According to a third aspect, this application provides a battery cell including a housing, an electrode assembly, and the end cover assembly according to any one of the foregoing embodiments, where the housing encloses an accommodating cavity having an opening, the electrode assembly is accommodated in the accommodating cavity, and the end cover covers the opening.

According to a fourth aspect, this application provides a battery, including the battery cell in the foregoing embodiment.

According to a fifth aspect, this application provides an electric apparatus including the battery in the foregoing embodiment, where the battery is configured to supply electrical energy.

The foregoing description is merely an overview of the technical solution of this application. For a better understanding of the technical means in this application such that they can be implemented according to the content of the specification, and to make the above and other objectives, features, and advantages of this application more obvious and easier to understand, the following describes specific embodiments of this application.

### BRIEF DESCRIPTION OF DRAWINGS

Persons of ordinary skill in the art can clearly understand various other advantages and benefits by reading the detailed description of the embodiments described below. The accompanying drawings are merely intended to illustrate some embodiments and are not intended to limit this application. In addition, in all the accompanying drawings, same parts are indicated by same reference signs. In the accompanying drawings:
FIG. 1 is a schematic structural diagram of a vehicle according to some embodiments of this application;
FIG. 2 is a schematic exploded view of a battery according to some embodiments of this application;
FIG. 3 is a schematic exploded view of a battery cell according to some embodiments of this application;
FIG. 4 is a schematic structural diagram of an end cover according to some embodiments of this application;
FIG. 5 is a cross-sectional view of the end cover shown in FIG. 4;
FIG. 6 is a schematic structural diagram of an electrolyte injection nozzle used in conjunction with an end cover according to some embodiments of this application;
FIG. 7 is a partial cross-sectional view of a cover body according to some embodiments of this application;
FIG. 8 is a schematic diagram of an end cover in an electrolyte injecting state according to some embodiments of this application;
FIG. 9 is a schematic diagram of an end cover in an electrolyte injecting state according to some other embodiments of this application;
FIG. 10 is a partial cross-sectional view of a cover body according to some embodiments of this application;
FIG. 11 shows an assembly diagram of a cover body and a first sealing member according to some embodiments of this application;
FIG. 12 shows an assembly diagram of a cover body, a first sealing member, and a second sealing member according to some embodiments of this application;
FIG. 13 is a schematic structural diagram of a first sealing member according to some embodiments of this application;
FIG. 14 is a state diagram of a second sealing member according to some embodiments of this application; and
FIG. 15 is a schematic exploded view of an end cover according to some embodiments of this application.

### Reference signs in the embodiments:

1000. vehicle; 100. battery; 200. controller; 300. motor; 10. box; 11. first portion; 12. second portion; 20. battery cell; 21. end cover assembly; 21a. end cover; a1. cover body; a11. cover portion; s. constructional surface; p. avoidance groove; a12. electrolyte injection platform; w. peripheral side wall; h. rolled-edge groove; r. first avoidance surface; k. electrolyte injection hole; k1. first hole section; k2. second hole section; k3. third hole section; a2. baffle; f. buffer space; 21b. first sealing member; b1. main body portion; b2. positioning portion; b3. limiting portion; 21c. second sealing member; c1. first sealing portion; c2. second sealing portion; c21. first rolled-edge section; c22. second rolled-edge section; c3. hot melt layer; c4. thermal conductive layer; 21d. electrode terminal; 21e. insulating member; 22. housing; 23. electrode assembly; 400. electrolyte injection nozzle; 401. flow channel; 403. electrolyte injection port; 402. mating surface; and F. thickness direction.

### DESCRIPTION OF EMBODIMENTS

The following describes in detail the embodiments of technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by those skilled in the art to which this application relates. The terms used herein are intended to merely describe the specific embodiments rather than to limit this application. The terms "include", "have", and any other variations thereof in the specification, claims and brief description of drawings of this application are intended to cover non-exclusive inclusions.

In the description of the embodiments of this application, the terms "first", "second", and the like are merely intended to distinguish between different objects, and shall not be understood as any indication or implication of relative importance or any implicit indication of the number, sequence or primary-secondary relationship of the technical features indicated. In the description of this application, "a plurality of" means at least two unless otherwise specifically stated.

In this specification, reference to "embodiment" means that specific features, structures or characteristics described with reference to the embodiment may be incorporated in at least one embodiment of this application. The word "embodiment" appearing in various positions in the specification does not necessarily refer to the same embodiment or an independent or alternative embodiment that is exclusive of other embodiments. Persons skilled in the art explicitly and implicitly understand that the embodiments described herein may combine with another embodiment.

In the description of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between contextually associated objects.

In the description of the embodiments of this application, the term "a plurality of" means more than two (inclusive). Similarly, "a plurality of groups" means more than two (inclusive) groups, and "a plurality of pieces" means more than two (inclusive) pieces.

In the description of the embodiments of this application, the orientations or positional relationships indicated by the technical terms "center", "longitudinal", "transverse", "length", "width", "thickness", "upper", "lower", "front", "rear", "left", "right", "perpendicular", "horizontal", "top", "bottom", "inside", "outside", "clockwise", "counterclockwise", "axial", " radial", "circumferential", and the like are based on the orientations or positional relationships as shown in the accompanying drawings. These terms are merely for ease and brevity of description of the embodiments of this application rather than indicating or implying that the apparatuses or components mentioned must have specific orientations or must be constructed or manipulated according to specific orientations, and therefore shall not be construed as any limitations on embodiments of this application.

In the description of the embodiments of this application, unless otherwise specified and defined explicitly, the terms "mount", "connect", "join", and "fasten" should be understood in their general senses. For example, they may refer to a fixed connection, a detachable connection, or an integral connection, may refer to a mechanical connection or electrical connection, and may refer to a direct connection, an indirect connection via an intermediate medium, an internal communication between two elements, or an interaction between two elements. Persons of ordinary skill in the art can understand specific meanings of these terms in this application as appropriate to specific situations.

Traction batteries have been not only used in energy storage power supply systems such as hydroelectric power plants, thermal power plants, wind power plants, and solar power plants, but also widely used in many other fields including electric transportation tools such as electric bicycles, electric motorcycles, and electric vehicles, military equipment, and aerospace.

The inventors have noted that to facilitate injection of an electrolyte into the battery cell via an electrolyte injection hole, the electrolyte injection hole usually adopts a step design, and the electrolyte injection hole of an electrolyte injection nozzle is supported at the step. After the electrolyte injection is completed, the electrolyte is easily remained at the step of the electrolyte injection hole. The electrolyte remaining at the corners of the step cannot be effectively removed. After the electrolyte injection is completed, after the primary sealing of the electrolyte injection hole (a sealing member is inserted into the electrolyte injection hole), another sealing member is usually welded by laser on the outside of the electrolyte injection hole for secondary sealing, because in the high-temperature environment generated by laser welding, the residual electrolyte at the corners of the step is easy to gasify and rush out of a weld pool, causing welding defects such as pinholes and explosion points, resulting in reduced reliability of sealing of the electrolyte injection hole.

To enhance reliability of sealing of the electrolyte injection hole, the applicant has found that the electrolyte remaining in the electrolyte injection hole can be avoided to alleviate the resulting problem of reduced reliability of sealing of the electrolyte injection hole. Specifically, a structure is designed to allow unobstructed flow of the electrolyte through the electrolyte injection hole, such that all of the electrolyte entering the electrolyte injection hole can flow into the battery cell without obstruction, without remaining in the electrolyte injection hole.

Based on the preceding considerations, to solve the problem of low reliability of sealing of the electrolyte injection hole, the inventors, after in-depth research, have designed an end cover. An electrolyte injection hole in the end cover includes a first hole section and a second hole section that are opened top-down, and the two holes are connected at two ends in close proximity to each other. In addition, an electrolyte injection nozzle fits with a hole wall of the first hole section to avoid an electrolyte overflowing through the first hole section, so as to make all of the electrolyte enter into a battery cell through the second hole section, alleviating the problem of reduced reliability of sealing of the electrolyte injection hole due to welding defects of the sealing peg caused by electrolyte residue.

The end cover disclosed in the embodiments of this application can be used for preparing a battery cell. The battery cell disclosed in the embodiments of this application may be used without limitation in electric apparatuses such as vehicles, ships, or aircrafts. The battery cell, battery, and the like disclosed in this application may be used to constitute a power supply system of that electric apparatus.

An embodiment of this application provides an electric apparatus that uses a battery as a power source. The electric apparatus may be, but is not limited to, a mobile phone, a tablet, a notebook computer, an electric toy, an electric tool, an electric bicycle, an electric car, a ship, or a spacecraft. The electric toy may be a fixed or mobile electric toy, for example, a game console, an electric toy car, an electric toy ship, and an electric toy airplane. The spacecraft may include an airplane, a rocket, a space shuttle, a spaceship, and the like.

For ease of description, the electric apparatus of an embodiment of the application being a vehicle 1000 is used as an example for description of the following embodiments.

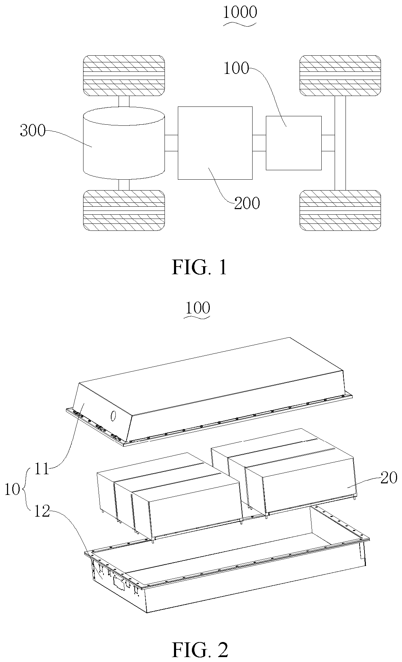

Referring to FIG. 1, FIG. 1 is a schematic structural diagram of a vehicle 1000 according to some embodiments of this application. The vehicle 1000 may be a fossil fuel vehicle, a natural-gas vehicle, or a new energy vehicle, where the new energy vehicle may be a battery electric vehicle, a hybrid electric vehicle, a range-extended vehicle, or the like. The vehicle 1000 is provided with a battery 100 inside, where the battery 100 may be disposed at the bottom, front or rear of the vehicle 1000. The battery 100 may be configured to supply power to the vehicle 1000. For example, the battery 100 may be used as an operational power source for the vehicle 1000. The vehicle 1000 may further include a controller 200 and a motor 300, where the controller 200 is configured to control the battery 100 to supply power to the motor 300, for example, to satisfy power needs of start, navigation, and driving of the vehicle 1000.

In some embodiments of this application, the battery 100 can be used as not only the operational power source for the vehicle 1000 but also a driving power source for the vehicle 1000, replacing or partially replacing fossil fuel or natural gas to provide driving traction for the vehicle 1000.

Referring to FIG. 2, FIG. 2 is an exploded view of a battery 100 according to some embodiments of this application. The battery 100 includes a box 10 and a battery cell 20, where the battery cell 20 is accommodated in the box 10. The box 10 is configured to provide an accommodating space for the battery cell 20. The box 10 may be a variety of structures. In some embodiments, the box 10 may include a first portion 11 and a second portion 12. The first portion 11 and the second portion 12 fit together so that the first portion 11 and the second portion 12 jointly define a space for accommodating the battery cell 20. The second portion 12 may be a hollow structure with one end open, and the first portion 11 may be a plate structure, where the first portion 11 covers the open side of the second portion 12 for the first portion 11 and the second portion 12 to jointly define an accommodating space; or the first portion 11 and the second portion 12 may both be hollow structures with one side open, where the open side of the first portion 11 is engaged with the open side of the second portion 12. Certainly, the box 10 formed by the first portion 11 and the second portion 12 may have a variety of shapes, for example, cylinder or cuboid.

In the battery 100, the battery cells 20 may be provided in plurality, and the plurality of battery cells 20 may be connected in series, parallel, or series-parallel, where being connected in series-parallel means a combination of series and parallel connections of the plurality of battery cells 20. The plurality of battery cells 20 may be directly connected in series, parallel or series-parallel, and then an entirety of the plurality of battery cells 20 is accommodated in the box 10; or certainly, the battery 100 may be formed by a plurality of battery cells 20 being connected in series, parallel or series-parallel first to form a battery module and then a plurality of battery modules being connected in series, parallel or series-parallel to form an entirety which is accommodated in the box 10. The battery 100 may further include other structures. For example, the battery 100 may further include a busbar configured to implement electrical connection between the plurality of battery cells 20.

Each battery cell 20 may be a secondary battery or a primary battery, and may be a lithium-sulfur battery, a sodium-ion battery, or a magnesium-ion battery, without being limited thereto. The battery cell 20 may be cylindrical, flat, cuboid, or of other shapes.

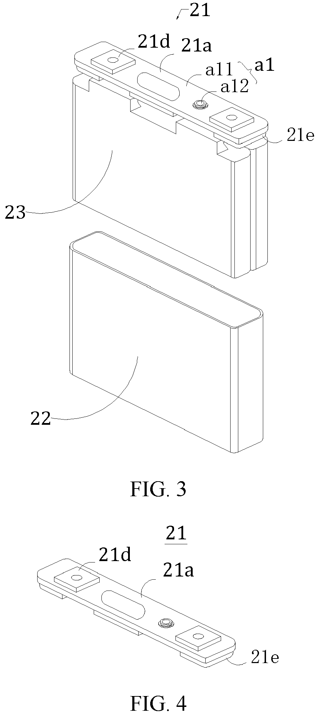

Referring to FIG. 3, FIG. 3 is a schematic structural exploded view of a battery cell 20 according to some embodiments of this application. The battery cell 20 refers to a smallest unit constituting a battery. As shown in FIG. 3, the battery cell 20 includes an end cover assembly 21, a housing 22, an electrode assembly 23, and other functional components.

The end cover assembly 21 refers to a component that covers an opening of the housing 22 to isolate an internal environment of the battery cell 20 from an external environment. Without limitation, a shape of the end cover assembly 21 may be adapted to a shape of the housing 22 to fit the housing 22. Without limitation, the end cover assembly 21 may be made of a material with specified hardness and strength (for example, aluminum alloy), so that the end cover assembly 21 is less likely to deform when subjected to extrusion and collision, enabling the battery cell 20 to have higher structural strength and improved safety performance. The end cover assembly 21 may be provided with functional components such as an electrode terminal 21d. The electrode terminal 21d may be configured to be electrically connected to the electrode assembly 23 for outputting or inputting electrical energy of the battery cell 20. In some embodiments, the end cover assembly 21 may be further provided with a pressure relief mechanism for releasing internal pressure when the internal pressure or a temperature of the battery cell 20 reaches a threshold. The end cover assembly 21 may also be made of various materials, such as copper, iron, aluminum, stainless steel, aluminum alloy, and plastic, which are not particularly limited in the embodiments of this application. In some embodiments, an insulating member may also be provided at an inner side of the end cover assembly 21. The insulating member may be configured to isolate an electrically connected component in the housing 22 from the end cover assembly 21 to reduce a risk of short circuit. For example, the insulating member may be made of plastic, rubber, or the like.

The housing 22 is an assembly configured to cooperate with the end cover assembly 21 to form an internal environment of the battery cell 20, where the formed internal environment can be used to accommodate the electrode assembly 23, an electrolyte, and other components. The housing 22 and the end cover assembly 21 may be independent components, an opening may be formed in the housing 22, and the end cover assembly 21 covers the opening to form the internal environment of the battery cell 20. The end cover assembly 21 and the housing 22 are not limited and may also be integrated. Specifically, the end cover assembly 21 and the housing 22 may form a shared connection surface before other components are disposed in the housing and then, the housing 22 is covered with the end cover assembly 21 when inside of the housing 22 needs to be enclosed. The housing 22 may be of various shapes and sizes, such as a cuboid shape, a cylindrical shape, and a hexagonal prism shape. Specifically, a shape of the housing 22 may be determined according to a specific shape and size of the electrode assembly 23. The housing 22 may be made of various materials, such as copper, iron, aluminum, stainless steel, aluminum alloy, and plastic, which are not particularly limited in the embodiments of this application.

The electrode assembly 23 is a component of the battery cell 20 in which electrochemical reactions occur. The housing 22 may include one or more electrode assemblies 23. The electrode assembly 23 is mainly formed by winding or stacking a positive electrode plate and a negative electrode plate, and a separator is generally disposed between the positive electrode plate and the negative electrode plate. Sealing portions of the positive electrode plate and the negative electrode plate that have active substances constitute a body portion of the electrode assembly, while sealing portions of the positive electrode plate and the negative electrode plate that have no active substances separately constitute a tab. A positive tab and a negative tab may both be located at one end of the body portion or be located at two ends of the body portion respectively. During charge and discharge of the battery, a positive electrode active substance and a negative electrode active substance react with an electrolyte, and the tabs are connected to the electrode terminals to form a current loop.

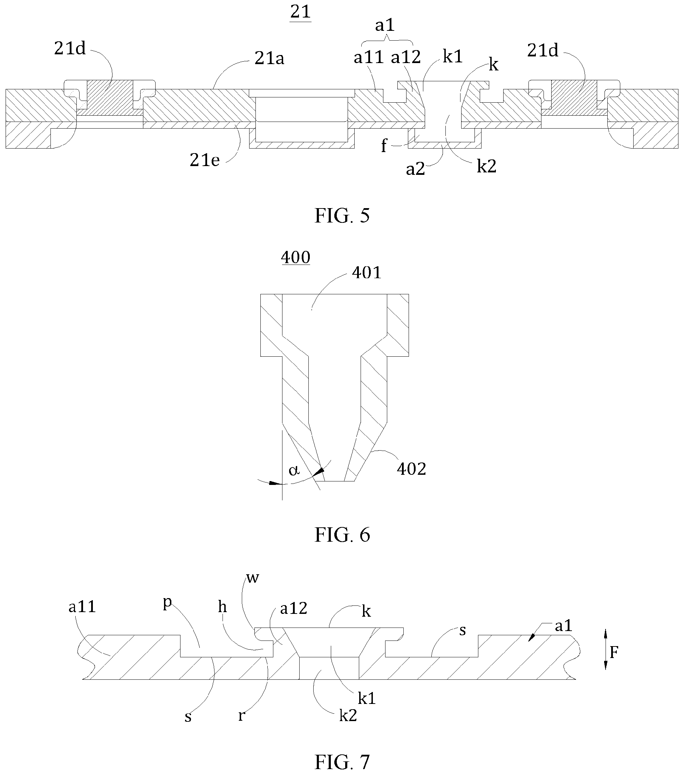

FIG. 4 is a schematic structural diagram of an end cover 21a according to some embodiments of this application. FIG. 5 is a cross-sectional view of the end cover 21a shown in FIG. 4. According to some embodiments of this application, referring to FIG. 4 and FIG. 5, this application provides an end cover 21a applied to a battery 100 cell. The end cover 21a includes a cover body a1, where the cover body a1 has an electrolyte injection hole k running through two sides in a thickness direction F of the cover body, the electrolyte injection hole k includes a first hole section k1 and a second hole section k2, the first hole section k1 and the second hole section k2 are opened top-down in the thickness direction F of the cover body a1, and the first hole section k1 and the second hole section k2 are connected at two ends in close proximity to each other. The first hole section k1 is configured to accommodate an electrolyte injection nozzle 400, at least a part of a hole wall fits with an outer wall of the electrolyte injection nozzle 400 to form an overflow prevention zone, and the overflow prevention zone is located above an electrolyte injection port 403 in the electrolyte injection nozzle 400.

The cover body a1 is a structure that can enclose with the housing 22 of the battery cell 20 to form a sealed space for accommodating the electrode assembly 23. The electrolyte injection hole k is formed in the cover body a1 to connect the inside and outside of the battery cell 20 for injection of the external electrolyte into the battery cell 20. The cover body a1 may be in the form of a plate, a block, or the like, which is not specifically limited.

In actual application, the thickness direction F of the cover body a1 corresponds to the vertical direction. The first hole section k1 and the second hole section k2 being opened top-down means that the first hole section k1 is connected above the second hole section k2. The first hole section k1 and the second hole section k2 may be arranged coaxially or eccentrically. For ease of description, the coaxial arrangement of the first hole section k1 and the second hole section k2 is used as an example for illustration, to be specific, the electrolyte injection hole k has a central axis arranged along the thickness direction F.

FIG. 6 is a schematic structural diagram of an electrolyte injection nozzle 400 used in conjunction with an end cover 21a according to some embodiments of this application. Referring to FIG. 6, the electrolyte injection nozzle 400 is a component capable of connecting an electrolyte supply source and having an electrolyte injection port 403 for the electrolyte to flow from its own interior into the electrolyte injection hole k. The electrolyte injection port 403, serving as an output position of the electrolyte injection nozzle 400, connects the interior of the electrolyte injection nozzle 400 and the electrolyte injection, the electrolyte injection nozzle 400 is constructed with a flow channel 401 connecting the electrolyte supply source and the electrolyte injection hole k, and the electrolyte injection port 403 is disposed at an outlet of the flow channel 401.

In actual electrolyte injection operation, the electrolyte injection nozzle 400 is at least partially accommodated in the first hole section k1, the electrolyte injection nozzle 400 fits with at least a part of the hole wall of the first hole section k1 to form an overflow prevention zone, and the electrolyte injection port 403 of the electrolyte injection nozzle 400 is located below the overflow prevention zone.

It can be understood that the hole wall of the first hole section k1 that fits with the electrolyte injection nozzle 400 is continuously arranged around the central axis of the electrolyte injection hole k. In this way, the electrolyte injection nozzle 400 can be hermetically connected to the hole wall that fits with itself to form the overflow prevention zone, so as to prevent the electrolyte flowing out of the electrolyte injection port 403 from flowing upward through a gap between the electrolyte injection nozzle 400 and the hole wall and from leaking out of the overflow prevention zone.

With the end cover 21a, the electrolyte flowing out of the electrolyte injection nozzle 400 is fully blocked by the overflow prevention zone and does not overflow outside the overflow prevention zone, thereby enabling all of the electrolyte flowing out of the electrolyte injection nozzle 400 to flow smoothly to the interior of the battery cell 20 through the second hole section k2 without remaining in the electrolyte injection hole k. In this way, welding defects at the weld of a sealing peg due to gasification of the electrolyte remaining in the electrolyte injection hole k can be avoided, and the problem of reduced reliability of sealing of the electrolyte injection hole k caused by the welding defects can be avoided.

In some embodiments, a hole diameter of an end of the first hole section k1 connected to the second hole section k2 is less than or equal to a hole diameter of an end of the second hole section k2 connected to the first hole section k1.

The two hole walls directly connecting the first hole section k1 and the second hole section k2 are a first hole wall and a second hole wall, and when the hole diameter of the end of the first hole section k1 connected to the second hole section k2 is greater than the hole diameter of the end of the second hole section k2 connected to the first hole section k1, an inner step structure is formed between the first hole wall and the second hole wall, and the electrolyte is easily remained in the inner step structure when it flows through the inner step structure, such that the electrolyte cannot smoothly flow from the first hole section k1 to the second hole section k2. In these embodiments of this application, the hole diameter of the end of the first hole section k1 connected to the second hole section k2 is less than or equal to the hole diameter of the end of the second hole section k2 connected to the first hole section k1, such that the electrolyte can be avoided to be remained in the inner step structure, and the electrolyte can flow from the second hole section k2 to the first hole section k1 without obstruction.

To enable the electrolyte to flow smoothly from the first hole section k1 to the second hole section k2, the first hole section k1 and the second hole section k2 may be arranged in a manner excluding the following: under the condition that the first hole wall is perpendicular to the central axis of the electrolyte injection hole k, a hole wall other than the first hole wall of the first hole section k1 and the first hole wall form an inner step structure; under the condition that the first hole wall is inclined from the bottom to the top with respect to the central axis of the electrolyte injection hole k, a hole wall other than the first hole wall of the first hole section k1 and the first hole wall form an inner step structure; under the condition that the first hole wall extends from top to bottom, in a top-to-bottom recessed groove/hole structure is constructed in the first hole wall; and the like.

To enable the electrolyte to flow smoothly from the first hole section k1 to the second hole section k2, the hole wall of the first hole section k1 extends from top to bottom. Specifically, the hole wall of the first hole section k1 may extend from top to bottom as a straight wall/inclined wall, or may extend from top to bottom as an arc-shaped wall, or may extend from top to bottom as a wave-shaped wall, provided that there is no structure for remaining the electrolyte and that the electrolyte is able to flow smoothly along the hole wall of the first hole section k1 into the second hole section k2 under self-weight.

In this case, the first hole section k1 can accommodate the electrolyte injection nozzle 400, and the hole wall of the first hole section k1 fits with the electrolyte injection nozzle 400 to form an overflow prevention zone, such that the electrolyte flowing out of the electrolyte injection nozzle 400 can directly enter the second hole section k2 or flow into the second hole section k2 through the first hole section k1 without obstruction. In this way, welding defects at the weld of the sealing peg due to gasification of the electrolyte remaining in the electrolyte injection hole k can be avoided, and the problem of reduced reliability of sealing of the electrolyte injection hole k caused by the welding defects can be avoided.

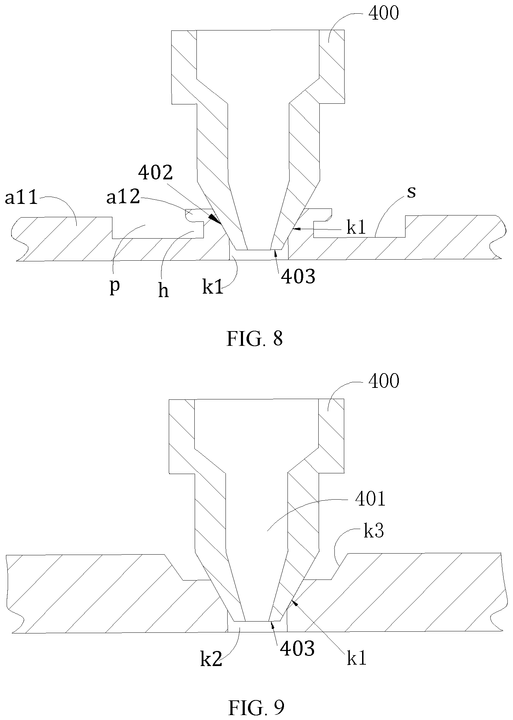

FIG. 7 is a partial cross-sectional view of a cover body a1 according to some embodiments of this application. FIG. 8 is a schematic diagram of an end cover 21a in an electrolyte injecting state according to some embodiments of this application. Referring to FIG. 7 and FIG. 8, in some embodiments, the hole wall of the first hole section k1 fully fits with the outer wall (for example, a mating surface 402) of the electrolyte injection nozzle 400, and the electrolyte injection port 403 of the electrolyte injection nozzle 400 extends into the second hole section k2.

The "fully fit with" means that the entire hole wall of the first bore section k1 fit with the outer wall (for example, the mating surface 402) of the electrolyte injection nozzle 400.

In this case, the overflow prevention zone formed by the first hole section k1 and the electrolyte injection nozzle 400 is relatively large, thereby providing a good overflow prevention effect. Moreover, the electrolyte injection port 403 of the electrolyte injection nozzle 400 directly extends into the second hole section k2, and the electrolyte discharged from the electrolyte injection port 403 directly enters into the second hole section k2, which can shorten a distance of the electrolyte entering into the battery cell 20, and can also avoid the electrolyte remaining on the hole wall of the first hole section k1.

Certainly, in other embodiments, a part of the hole wall of the first hole section k1 may alternatively fit with the outer wall (for example, the mating surface 402) of the electrolyte injection nozzle 400, and the electrolyte injection nozzle 400 extends into the first hole section k1.

In an embodiment, the electrolyte injection port 403 of the electrolyte injection nozzle 400 is disposed facing downward, which can allow the electrolyte to flow directly toward the interior of the battery cell 20. Certainly, the electrolyte injection port 403 of the electrolyte injection nozzle 400 may alternatively be disposed on a side wall of the electrolyte injection nozzle 400 and opened toward the hole wall of the first hole section k1 or the hole wall of the second hole section k2. In this case, a part of the electrolyte flows along the hole wall of the first hole section k1 and/or the second hole section k2 to enter into the battery cell 20.

In an embodiment, the hole diameters of the second hole section k2 are equal everywhere, such that the electrolyte does not remain on the hole wall of the second hole section k2, and it is more convenient for installation of the first sealing member 21b. Certainly, the hole diameters of the second hole section k2 may alternatively gradually increase from top to bottom, or may be in other forms, provided that the electrolyte is not easy to remain.

In some embodiments, still referring to FIG. 5 and FG. 7, the hole diameters of the first hole section k1 gradually decrease from top to bottom, an end of the second hole section k2 connected to the first hole section k1 is a first junction end, and a hole diameter of the first junction end is equal to or greater than a minimum hole diameter of the first hole section k1.

Cases in which the hole diameters of the first hole section k1 gradually decrease from top to bottom include: the hole wall of the first hole section k1 is an inclined wall with a gradually decreasing hole diameter, the hole wall of the first hole section k1 is an arc-shaped wall with a gradually decreasing hole diameter, and the like. When the hole diameters of the first hole section k1 gradually decrease from top to bottom, no circuitous structure is formed, and the electrolyte can smoothly flow downward under self-weight.

The minimum hole diameter of the first hole section k1 is the hole diameter of the end of the first hole section k1 connected to the second hole section k2. The end of the second hole section k2 connected to the first hole section k1 is the first junction end. When the hole diameter of the first junction end is equal to the minimum hole diameter of the first hole section k1, the opposite ends of the second hole section k2 and the first hole section k1 coincide with each other; and when the hole diameter of the first junction end is greater than the minimum hole diameter of the first hole section k1, the electrolyte flowing from the first hole section k1 to the second hole section k2 can flow directly toward the battery cell 20. This can reduce the probability of the electrolyte flowing along the hole wall of the second hole section k2 and improve the injection efficiency of the electrolyte.

Certainly, the hole diameter of the first junction end is usually set to be equal to the minimum hole diameter of the first hole section k1, so as to form the electrolyte injection hole k with a large top and a small bottom, which is more convenient for the installation of the first sealing member 21b.

In this case, when the hole diameters of the first hole section k1 gradually decrease from top to bottom, no circuitous structure is formed, the electrolyte can smoothly flow downward under self-weight, and the electrolyte flowing from the first hole section k1 to the second hole section k2 can flow directly toward the interior of the battery cell 20, which can reduce the probability of the electrolyte flowing along the hole wall of the second hole section k2 and improve the injection efficiency of the electrolyte.

The first sealing member 21b mentioned in the embodiments of this application is the sealing member used for the electrolyte injection hole k during the primary sealing, and the second sealing member 21c is the sealing member used for the electrolyte injection hole k during the secondary sealing.

FIG. 9 is a schematic diagram of an end cover 21a in an electrolyte injecting state according to some other embodiments of this application. In some embodiments, referring to FIG. 9, the electrolyte injection hole k further includes a third hole section k3, and the first hole section k1 is connected between the third hole section k3 and the second hole section k2. An end of the third hole section k3 connected to the first hole section k1 is a second junction end, and a hole diameter of the second junction end is equal to or greater than a maximum hole diameter of the first hole section k1.

The third hole section k3 may serve as a hole section for mating with the first sealing member 21b, or may serve as a hole section for mating with the second sealing member 21c, which is not specifically limited. The end of the third hole section k3 connected to the first hole section k1 is the second junction end. The hole diameter of the second junction end is greater than or equal to the maximum hole diameter of the first hole section k1, which facilitates the use of the sealing peg and the electrolyte injection nozzle 400.

In this case, when the electrolyte injection hole k is sealed for the second time, the second sealing member 21c can be accommodated in the third hole section k3, such that the second sealing member 21c can be avoided to be exposed to the outside of the cover body a1, which is unsightly and easy to cause scratches to the outside objects.

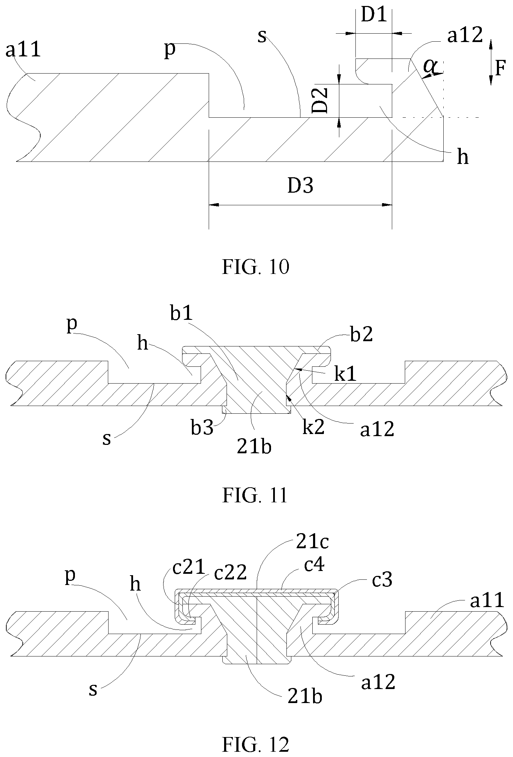

FIG. 10 is a partial cross-sectional view of a cover body a1 according to some embodiments of this application. In some embodiments, referring to FIG. 10, an included angle between the hole wall of the first hole section k1 and the thickness direction F of the cover body a1 is a first included angle α, where 0°≤α≤45°. Specifically, the first included angle α may be 5°, 10°, 15°, 20°, 25°, 30°, 35°, 40°, 45°, and the like.

In this case, the hole wall of the first hole section k1 is in an inclined straight wall, which is convenient for processing. Meanwhile, the first included angle α is in the range of 0° to 45°, and the hole wall of the first hole section k1 has less resistance to the electrolyte, which facilitates the electrolyte entering into the first hole section k1 to flow smoothly to the second hole section k2 under self-weight, and avoids the electrolyte sticking to the hole wall of the first hole section k1.

Understandably, referring to FIG. 6, to make the electrolyte injection nozzle 400 fit with the first hole section k1, an included angle α is also formed between an outer wall (for example, the mating surface 402) of a portion of the electrolyte injection nozzle 400 extending into the electrolyte injection hole k and the thickness direction F of the cover body a1.

Referring to FIG. 7 and FIG. 10, in some embodiments, the cover body a1 includes a cover portion a11 and an electrolyte injection platform a12, where the cover portion a11 has a constructional surface s, the constructional surface s faces away from the interior of the battery cell 20, the electrolyte injection platform a12 protrudes from the constructional surface s, and the electrolyte injection hole k runs through the cover portion a11 and the electrolyte injection platform a12.

In FIG. 7 and FIG. 10, the interior of the battery cell 20 is below the cover body a1. The cover portion a11 is a structure of the cover body a1 for forming a sealed space with the housing 22 of the battery cell 20 for accommodating the electrode assembly 23, and may be in a plate shape or the like, which is not specifically limited. A surface of the cover portion a11 on the side facing away from the interior of the battery cell 20 is the constructional surface s, the electrolyte injection platform a12 is a boss structure protruding from the constructional surface s, and the electrolyte injection hole k runs through both the electrolyte injection platform a12 and the cover portion a11.

Understandably, the electrolyte injection platform a12 has a peripheral side wall w and an end wall, where the peripheral side wall w is continuously disposed around the axial direction of the electrolyte injection hole k and faces away from the electrolyte injection hole k, and the end wall intersects with the peripheral side wall w and faces away from the interior of the battery cell 20. In actual operation, the second sealing member 21c may cover the end wall and be hermetically connected to the end wall to realize the secondary sealing; further, an edge of the second sealing member 21c may also be bent towards the cover portion a11 and hermetically connected to the peripheral side wall w of the electrolyte injection platform a12, thereby increasing the sealing area and sealing effect between the second sealing member 21c and the electrolyte injection platform a12; and furthermore, a welding position may be located between the second sealing member 21c and the peripheral side wall w of the electrolyte injection platform a12 such that the high temperature during welding has less effect on the electrolyte.

In this case, the electrolyte injection platform a12 protrudes from the cover portion a11, which not only can extend a length of the electrolyte injection hole k, but also increases a mating area between the first sealing member 21b and the electrolyte injection hole k, improving the effectiveness of the primary sealing as well as the stability of the installation of the first sealing member 21b; and in addition, the second sealing member 21c and the electrolyte injection platform a12 are in a bendable contact to form a circuitous path, improving the reliability of sealing and sealing effect of the electrolyte injection hole k.

Still referring to FIG. 7 and FIG. 10, in some embodiments, the electrolyte injection platform a12 has a peripheral side wall w, the peripheral side wall w surrounds an axial direction of the electrolyte injection hole k, and the peripheral side wall w is constructed with a rolled-edge groove h recessed toward the electrolyte injection hole k.

The peripheral side wall w of the electrolyte injection platform a12 is a side wall continuously disposed around the axial direction of the electrolyte injection hole k and facing away from the electrolyte injection hole k. Understandably, the electrolyte injection platform a12 further includes an end wall intersecting with the peripheral side wall w.

The rolled-edge groove h is a groove recessed on the peripheral side wall w of the electrolyte injection hole k. The rolled-edge groove h may be disposed continuously around the axial direction of the electrolyte injection hole k, or a plurality of the rolled-edge grooves h may be arranged around the axial direction of the electrolyte injection hole k at spaced intervals. Certainly, the rolled-edge groove h may be provided in only one and may not be disposed around the axial direction of the electrolyte injection hole k. The recessed direction of the rolled-edge groove h may be along the radial direction of the electrolyte injection hole k, or certainly, may be at an included angle to the radial direction of the electrolyte injection hole k.

In actual operation, the second sealing member 21c covers the end wall of the electrolyte injection platform a12, and at least a part of an edge of the second sealing member 21c is bent toward the cover portion a11, then bent along the radial direction of the electrolyte injection hole k, and extended into the rolled-edge groove h.

In this case, the second sealing member 21c can be hermetically connected to a groove wall of the rolled-edge groove h, a part of the peripheral side wall w, and all of the end wall, greatly increasing a sealing area between the electrolyte injection platform a12 and the second sealing member 21c; and the rolled-edge groove h, the peripheral side wall w, and the end wall form a circuitous route, improving the sealing effect of the second sealing member 21c. Moreover, the provision of the rolled-edge groove h can also enhance the fixation between the second sealing member 21c and the electrolyte injection platform a12.

In a specific embodiment, the second sealing member 21c is hermetically connected to an upper inner wall of the rolled-edge groove h itself in the thickness direction F, and is not in contact with a lower inner wall (that is, first wall surface hereinafter) of the rolled-edge groove h in the thickness direction F. In this case, the second sealing member 21c has a larger edge-rolling operation range, which makes the edge-rolling operation of the second sealing member 21c easier.

In some embodiments, still referring to FIG. 7 and FIG. 10, an inner wall of the rolled-edge groove h on a side in the thickness direction F and close to the interior of the battery cell 20 is the first wall surface, and the first wall surface is flush with the constructional surface s.

In this case, the rolled-edge groove h can be formed by a boss protruding from the peripheral side wall w of the electrolyte injection platform a12 together with the constructional surface s without the need for slotting or the like, and the rolled-edge groove h can be formed more conveniently.

In some embodiments, still referring to FIG. 7 and FIG. 10, the cover portion a11 is constructed with an avoidance groove p, where the avoidance groove p is recessed toward the interior of the battery cell 20, and a bottom surface of the avoidance groove p serves as the constructional surface s. Understandably, the avoidance groove p is located on a side of the cover portion a11 facing away from the battery cell 20, and an electrolyte injection tank is located within the avoidance groove p. As for the relationship between a depth of the avoidance groove p and a height of the electrolyte injection platform a12 may be equal or unequal, which is not specifically limited.

The provision of the avoidance groove p may reduce the protruding height of the electrolyte injection platform a12 or even make the electrolyte injection platform a12 not protrude, so as to reduce the influence of the electrolyte injection platform a12 on the outside, and also to avoid the electrolyte injection platform a12 from being damaged by the outside. In addition, during bending the second sealing member 21c described below, the avoidance groove p can provide a larger operating space.

In some embodiments, still referring to FIG. 10, a depth of recess of the rolled-edge groove h is a first dimension D1, a width of the rolled-edge groove h in the thickness direction F is a second dimension D2, a side wall of the avoidance groove p opposite a groove bottom of the rolled-edge groove h is a first side wall, and in a direction perpendicular to the thickness direction F, a distance between the groove bottom of the rolled-edge groove h and the first side wall is a third dimension D3; where D1≥0.5 mm, D2≥0.5 mm, 2≥D1/D2≥0.5, and D3≥3D1.

Understandably, the first side wall of the avoidance groove p and the bottom surface of the avoidance groove p are set at an angle. In an example, D1=2 mm, D2=1.5, D1/D2=4/3. In an example, D3=3D1=6 mm.

It has been demonstrated through experiments that when the first dimension D1, the second dimension D2, and the third dimension D3 are in the foregoing ranges, there is more space available for performing an edge rolling operation when edge rolling processing is performed on the second sealing member 21c, and it is convenient to perform edge rolling processing on the second sealing member 21c.

In an embodiment, still referring to FIG. 7, the first hole section k1 is formed on the electrolyte injection platform a12, and the second hole section k2 is formed on the cover portion a11. In actual operation, the first hole section k1 and the second hole section k2 can be processed and designed based on the height of the electrolyte injection platform a12 and the thickness of the cover portion a11, such that the size of the electrolyte injection holes k is processed more accurately, and the size of the electrolyte injection holes k is designed more simply.

Certainly, in other embodiments, the forms of formation of the first hole section k1 and the second hole section k2 are not limited to thereto. For example, the first hole section k1 may alternatively be formed on the electrolyte injection platform a12, and the second hole section k2 may alternatively be formed on both the electrolyte injection platform a12 and the cover portion a11. For another example, the second hole section k2 is formed on the cover portion a11, and the first hole section k1 is formed on both the electrolyte injection platform a12 and the cover portion a 11.

In some embodiments, referring to FIG. 5, the end cover 21a further includes a baffle a2, where the baffle a2 is disposed on a side of the cover body a1 facing the interior of the battery cell 20 and blocks a flow path of an electrolyte flowing directly from the electrolyte injection hole k to the interior of the battery cell 20.

The baffle a2 is fixedly connected or integrally connected to the cover body a1, and the cover body a1 is utilized to make the baffle a2 have a certain effect of resisting the impact of the electrolyte. The baffle a2 blocks the flow path of the electrolyte flowing directly from the electrolyte injection hole k to the interior of the battery cell 20, to be specific, under the action of the baffle, the electrolyte cannot flow directly from the electrolyte injection hole k to the battery cell 20, but changes the flow direction when running through the baffle a2 and then enters into the battery cell 20.

Specifically, the baffle a2 is disposed opposite the electrolyte injection hole k, and in the thickness direction F, an orthographic projection of the electrolyte injection hole k falls within an orthographic projection range of the baffle. The electrolyte flowing out of the electrolyte injection hole k flows towards the baffle a2 under gravity, then changes the flow direction under the blockage of the baffle a2, and enters into the battery cell 20.

It should be noted that in this case, a buffer space f is formed between the baffle a2 and the cover body a1, the buffer space f communicates with the electrolyte injection holes k and the interior of the battery cell 20, and an outlet of the buffer space f is not directly opposite the electrode assembly 23 inside the battery cell 20, so as to prevent fast-flowing electrolyte directly impacting on the electrode assembly 23 and causing damage to the electrode assembly 23.

In an embodiment of this application, referring to FIG. 4 and FIG. 5, the end cover 21a includes a cover body a1, where the cover body a1 has an electrolyte injection hole k running through two sides in a thickness direction F of the cover body, the electrolyte injection hole k includes a first hole section k1 and a second hole section k2, the first hole section k1 and the second hole section k2 are opened top-down in the thickness direction F of the cover body a1, the first hole section k1 and the second hole section k2 are connected at two ends in close proximity to each other, hole diameters of the first hole section k1 decrease gradually from top to bottom, and hole diameters of the second hole section k2 are equal everywhere. The first hole section k1 is configured to accommodate an electrolyte injection nozzle 400, and fully fits with an outer wall of the electrolyte injection nozzle 400 to form an overflow prevention zone, where the overflow prevention zone is located above an electrolyte injection port 403 in the electrolyte injection nozzle 400.

According to a second aspect, this application further provides an end cover assembly 21.

FIG. 11 shows an assembly diagram of a cover body a1 and a first sealing member 21b according to some embodiments of this application. FIG. 12 shows an assembly diagram of a cover body a1, a first sealing member 21b, and a second sealing member 21c according to some embodiments of this application.

Referring to FIG. 11 and FIG. 12, according to some embodiments of this application, the end cover assembly 21 provided in this application is applied to a battery cell 20, where the end cover assembly 21 includes a first sealing member 21b, a second sealing member 21c, and the end cover 21a according to any one of the foregoing embodiments. The first sealing member 21b is disposed inside the electrolyte injection hole k and seals the first hole section k1 and the second hole section k2, and the second sealing member 21c covers a side of the first sealing member 21b facing away from the interior of the battery cell 20 and is hermetically connected to the cover body a1.

The end cover 21a is described in detail in the foregoing embodiments and is not repeated herein.

The first sealing member 21b is a member capable of protruding into the electrolyte injection hole k and sealing the electrolyte injection hole k, for sealing the electrolyte injection hole k for the first time. The first sealing member 21b can fully seal the electrolyte injection hole k, to be specific, the first sealing member 21b is hermetically connected to the entire hole wall of the electrolyte injection hole k. The first sealing member 21b may alternatively partially seal the electrolyte injection hole k, to be specific, the first sealing member 21b is hermetically connected to a part of the hole wall of the electrolyte injection hole k and seals the electrolyte injection hole k. The first sealing member 21b may be in the form of a sealing peg, a sealing post, a sealing plug, or the like. Without limitation, the first sealing member 21b is in an interference-sealed connection or a threaded-sealed connection with the electrolyte injection hole k. When the first sealing member 21b is in a threaded-sealed connection with the electrolyte injection hole k, the second hole section k2 may be provided with internal threads threaded with the first sealing member 21b. The first sealing member 21b may be a rubber-plastic member, for example, rubber or silicone, which is not specifically limited.

The second sealing member 21c may be a sealing sheet, a sealing plate, or other members, and is capable of covering the first sealing member 21b and is also capable of being hermetically connected to the cover body a1, so as to perform secondary sealing on the electrolyte injection hole k. Typically, the second sealing member 21c is made of a metal material (for example, aluminum), so as seal the cover body a1 through welding. Certainly, the second sealing member 21c is not limited to metal material, and may alternatively be made of plastic material when it seals the cover body a1 through bonding.

In the foregoing end cover assembly 21, because the electrolyte injection hole k is constructed to form a structure that allows the electrolyte to flow into the battery cell 20 without obstruction, the electrolyte basically does not remain in the electrolyte injection hole k. In this way, when the electrolyte injection hole k is sealed for the second time, no welding defect is caused due to the gasified electrolyte running through a weld pool during welding the second sealing member 21c, and thus the problem of reduced reliability of sealing of the electrolyte injection hole k caused by welding defects can be avoided.

In some embodiments, still referring to FIG. 11 and FIG. 12, the cover body a1 includes a cover portion a11 and an electrolyte injection platform a12, where the cover portion a11 has a constructional surface s, the constructional surface s faces away from the interior of the battery cell 20, the electrolyte injection platform a12 protrudes from the constructional surface s, and the electrolyte injection hole k runs through the cover portion a11 and the electrolyte injection hole k. The second sealing member 21c includes a first sealing portion c1 and a second sealing portion c2 that are interconnected, where the first sealing portion c1 covers the side the first sealing member 21b facing away from the interior of the battery cell 20, and the second sealing portion c2 is bent relative to the first sealing portion c1 toward the interior of the battery cell 20 and is hermetically connected to a peripheral side wall w of the electrolyte injection platform a12.

The descriptions of the terms such as the cover portion a11, the electrolyte injection platform a12, and the peripheral side wall w of the electrolyte injection platform a12 are described in detail in the foregoing embodiments and are not repeated herein.

The second sealing portion c2 may be connected to the entirety of the edge of the first sealing portion c1 and continuously disposed around the first sealing portion c1, or may be connected to only a part of the edge of the first sealing portion c1. The second sealing portion c2 may be provided in plurality, and the plurality of the second sealing portions c2 may be arranged along the edge of the first sealing portion c1 at spaced intervals. The first sealing portion c1 and the second sealing portion c2 may be pre-molded into a structure with an included angle, or may be a structure bent on-site at an included angle during the secondary sealing. The first sealing portion c1 and the first sealing portion c1 may be integrally connected.

After the first sealing member 21b is installed in the electrolyte injection hole k, the second sealing member 21c is sealed for the second time. Specifically, the first sealing portion c1 of the second sealing member 21c first covers the side of the first sealing member 21b facing away from the interior of the battery cell 20. In this case, the first sealing portion c1 may fit with the end wall of the electrolyte injection platform a12 (for example, under the condition that the first sealing member 21b does not extend beyond the electrolyte injection platform a12), and the first sealing portion c1 may fit with a part of the first sealing member 21b that extends beyond the electrolyte injection platform a12. The second sealing portion c2 of the second sealing member 21c is then bent relative to the first sealing portion c1 toward the interior of the battery cell 20 until it fits with the peripheral side wall w of the electrolyte injection hole k. Finally, the second sealing member 21c is fixedly connected to the electrolyte injection platform a12 (through, for example, welding or bonding).

In this way, the second sealing member 21c is sealed via the first sealing portion c1 and the second sealing portion c2 for the second time, with a large sealing area and good sealing effect. In addition, the first sealing portion c1 and the second sealing portion c2 are bent to form a circuitous sealing path, which further improves the sealing effect.

In some embodiments, referring to FIG. 12, the electrolyte injection platform a12 has a peripheral side wall w, the peripheral side wall w surrounds an axial direction of the electrolyte injection hole k, and the peripheral side wall w is constructed with a rolled-edge groove h recessed toward the electrolyte injection hole k. The second sealing portion c2 includes a first rolled-edge section c21 and a second rolled-edge section c22 that are interconnected, where the first rolled-edge section c21 is connected to the first sealing portion c1 and bent relative to the first sealing portion c1 toward the interior of the battery cell 20, the first rolled-edge section c21 is hermetically connected to the peripheral side wall w, and the second rolled-edge section c22 is bent relative to the first rolled-edge section c21 toward the electrolyte injection hole k and hermetically connected to the rolled-edge groove h.

The introduction of the rolled-edge groove h is described in detail in the foregoing embodiments and is not repeated herein.

The first rolled-edge section c21 is bent relative to the first sealing portion c1 toward the interior of the battery cell 20, and the second rolled-edge section c22 is bent relative to the first rolled-edge section c21 toward the electrolyte injection hole k. The first rolled-edge section c21 and the second rolled-edge section c22 may be directly molded into a bent structure, or may be rolled into a bent structure on site during secondary sealing. The second rolled-edge section c22 may be connected to a part of the edge of the first rolled-edge section c21 or may be connected to all of the edge of the first rolled-edge section c21.

When rolled-edge processing is performed on the second sealing member 21c, after the first sealing portion c1 of the second sealing member 21c covers the end wall of the electrolyte injection platform a12 or a portion of the first sealing member 21b extending beyond the electrolyte injection platform a12, the first rolled-edge section c21 is bent toward the interior of the battery cell 20, and the second rolled-edge section c22 is bent toward the electrolyte injection hole k and extends into the rolled-edge groove h, and finally, the second sealing member 21c is fixed to the electrolyte injection platform a12 (through, for example, welding or bonding).

During specific operation, the second sealing member 21c may use a sealing plate. The sealing plate first covers the end wall of the electrolyte injection platform a12 or the portion of the first sealing member 21b extending beyond the electrolyte injection platform a12, then the sealing plate is bent along the peripheral side wall w of the electrolyte injection platform a12, and then an end portion of the sealing plate is bent towards the electrolyte injection hole k into the rolled-edge groove h. In this case, an end wall of the sealing plate covering the electrolyte injection platform a12 or the portion of the first sealing member 21b extending beyond the electrolyte injection platform a12 constitutes the first sealing portion c1, a portion of the sealing plate fitting with the peripheral side wall w of the electrolyte injection platform a12 forms the first rolled-edge section c21, and a portion of the sealing plate extending into the rolled-edge groove h forms the second rolled-edge section c22.

In this case, the second sealing member 21c can be hermetically connected to a groove wall of the rolled-edge groove h, a part of the peripheral side wall w, and all of the end wall, greatly increasing a sealing area between the electrolyte injection platform a12 and the second sealing member 21c; and the rolled-edge groove h, the peripheral side wall w, and the end wall form a circuitous route, improving the sealing effect of the second sealing member 21c. Moreover, a hook-like structure including the first sealing portion c1, the first rolled-edge section c21, and the second rolled-edge section c22 can further enhance the fixation between the second sealing member 21c and the electrolyte injection platform a12.

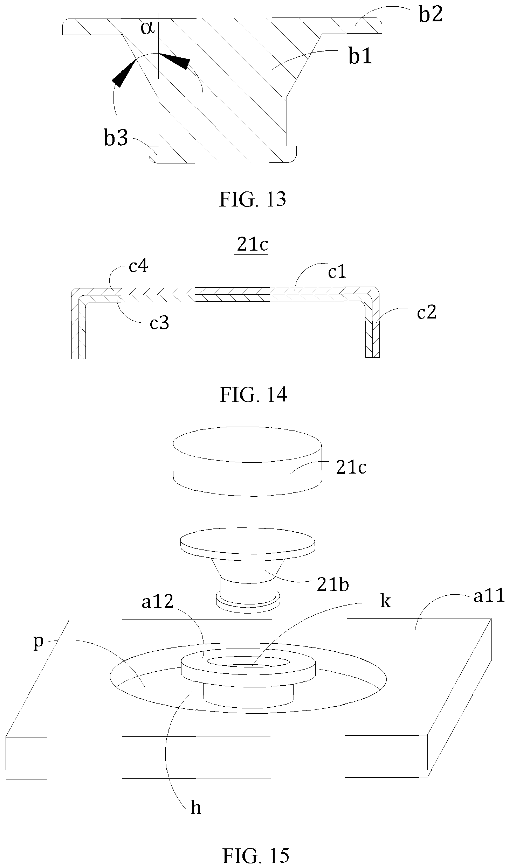

FIG. 14 is a state diagram of a second sealing member 21c according to some embodiments of this application. In some embodiments, referring to FIG. 12 and FIG. 14, the second sealing member 21c includes a hot melt layer c3 and a thermal conductive layer c4 that are stacked, where the hot melt layer c3 is located between the thermal conductive layer c4 and the cover body a1, and the hot melt layer c3 is thermally meltable to hermetically connect the thermal conductive layer c4 and the cover body a1.

The hot melt layer c3 is a layer structure capable of melting when the ambient temperature increases and hardening and bonding the thermal conductive layer c4 and the cover body a1 during cooling, and the hot melt layer c3 may be a hot melt adhesive film layer formed from thermoplastic adhesive materials (for example, ethylene-vinyl acetate copolymer (EVA), polyamide (PA), polyolefin, and polylactic acid) having a low melting temperature.

The thermal conductive layer c4 is a material layer having thermal conductivity, and may be, but is not limited to, a metal layer (for example, an aluminum layer and a stainless steel layer), and a ceramic layer (for example, aluminum oxide and silicon oxide). Possibly, the thermal conductive layer c4 has certain flexibility and is easy to bend.

After the second sealing member 21c completes covering (if bending is required, after the first rolled-edge section c21 and the second rolled-edge section c22 are formed through bending), the thermal conductive layer c4 is heated, the heat from the thermal conductive layer c4 is transferred to the hot melt layer c3 and melts the hot melt layer c3, and the molten hot melt material has certain flowability and can fill the space between the thermal conductive layer c4 and the electrolyte injection platform a12 (and/or the first sealing member 21b), realizing effective sealing and effective fixation of the second sealing member 21c.

In this case, when the hot melt layer c3 is used to bond the thermal conductive layer c4 and the electrolyte injection platform a12 (and/or the first sealing member 21b), the gasification of the electrolyte can be mitigated or even avoided because the hot melt temperature of the hot melt layer c3 is much lower than the high temperature generated by the welding, thereby avoiding the problem of reducing the bonding strength and affecting the sealing effect due to the gasified electrolyte running through the hot melt layer c3.

FIG. 13 is a schematic structural diagram of a first sealing member 21b according to some embodiments of this application. In some embodiments, referring to FIG. 11 and FIG. 13 together, the first sealing member 21b includes a main body portion b1 and a positioning portion b2 that are close to each other in the thickness direction F, where the main body portion b1 is hermetically connected to the inside of the electrolyte injection hole k, and the positioning portion b2 is located outside the electrolyte injection hole k and lapped over a surface of the cover body a1 facing away from the interior of the battery cell 20. The second sealing member 21c hermetically covers the positioning portion b2.

The main body portion b1 is a portion of the first sealing member 21b that is completely located in the electrolyte injection hole k for matching and sealing the electrolyte injection hole k. The positioning portion b2 is a portion of the first sealing that extends beyond and over the electrolyte injection hole k, and is lapped over the cover body a1 (which may specifically be an end wall for electrolyte injection).

During installation of the first sealing member 21b, the main body portion b1 first extends into the electrolyte injection hole k and seals the electrolyte injection hole k. As the main body portion b1 continuously goes down, the positioning portion b2 gradually approaches the cover body a1 (which may specifically be the end wall of the electrolyte injection); and when the positioning portion b2 is lapped over the cover body a1 (which may specifically be the end wall of the electrolyte injection), the main body portion b1 goes down into place, and in this case, the first sealing member 21b is installed in place.

The second sealing member 21c hermetically covers the positioning portion b2, which may specifically be that the first sealing portion c1 covers the positioning portion b2.

In this way, whether the first sealing member 21b is installed well or not can be determined based on whether the positioning portion b2 is lapped over the cover body a1, making the installation of the first sealing member 21b easier.

In some embodiments, still referring to FIG. 11 and FIG. 13, the first sealing member 21b further includes a limiting portion b3 located outside the electrolyte injection hole k, the main body portion b1 is connected between the limiting portion b3 and the positioning portion b2, and the limiting portion b3 abuts against a surface of the cover body a1 facing the interior of the battery cell 20.

The limiting portion b3 is a portion of the first sealing member 21b disposed below the electrolyte injection hole k, to be specific, inside the battery cell 20, and has a size larger than that of the electrolyte injection hole k in the radial direction of the electrolyte injection hole k, so as to abut against an inner surface of the cover body a1 (that is, a surface of the cover body a1 facing the interior of the battery cell 20) after entering into the battery cell 20.

Understandably, the limiting portion b3 has certain flexibility/toughness, so it runs through the electrolyte injection hole k and extends into the interior of the battery cell 20. A size of the limiting portion b3 is slightly larger than that of the electrolyte injection hole k in a radial direction of the electrolyte injection hole k, so as to facilitate the extension of the limiting portion b3 into the interior of the battery cell 20.

When the first sealing member 21b is installed well, the positioning portion b2 and limiting portion b3 of the first sealing member 21b are used to limit the first sealing member 21b to the cover body a1, which can effectively prevent the first sealing member 21b from coming off.

According to a third aspect, this application further provides a battery cell 20 including a housing 22, an electrode assembly 23, and the end cover assembly 21 according to any one of the foregoing embodiments, where the housing 22 encloses an accommodating cavity having an opening, the electrode assembly 23 is accommodated in the accommodating cavity, and the end cover 21a covers the opening.

According to a fourth aspect, this application further provides a battery 100, including the battery cell 20 in the foregoing embodiment.

According to a fifth aspect, this application further provides an electric apparatus including the battery 100 in the foregoing embodiment, where the battery 100 is configured to supply electrical energy.

Technical features in the foregoing embodiments may be combined in any way. For brevity of description, possible combinations of the technical features in the foregoing embodiments are not described all. However, as long as there is no contradiction among combinations of these technical features, all the combinations should be considered within a range recorded in this specification.

The foregoing embodiments only represent several implementations of this application, and descriptions thereof are specific and detailed, but should not be construed as a limitation on the scope of this application patent. It should be noted that those of ordinary skill in the art may further make several modifications and improvements without departing from the concept of this application, and these modifications and improvements also fall within the protection scope of this application. Therefore, the protection scope of this application should be subject to the appended claims.

## Claims

1. An end cover applied to a battery cell, wherein the end cover comprises:
a cover body having an electrolyte injection hole running through two sides in a thickness direction of the cover body, the electrolyte injection hole comprising a first hole section and a second hole section, the first hole section and the second hole section being opened top-down in the thickness direction of the cover body, and the first hole section and the second hole section being connected at two ends in close proximity to each other;
wherein the first hole section is configured to accommodate an electrolyte injection nozzle, at least a part of a hole wall fits with an outer wall of the electrolyte injection nozzle to form an overflow prevention zone, and the overflow prevention zone is located above an electrolyte injection port in the electrolyte injection nozzle.

2. The end cover according to claim 1, wherein the hole wall of the first hole section fully fits with the outer wall of the electrolyte injection nozzle, and the electrolyte injection port of the electrolyte injection nozzle extends into the second hole section.

3. The end cover according to claim 1 or 2, wherein hole diameters of the first hole section gradually decrease from top to bottom, an end of the second hole section connected to the first hole section is a first junction end, and a hole diameter of the first junction end is equal to or greater than a minimum hole diameter of the first hole section.

4. The end cover according to claim 3, wherein the electrolyte injection hole further comprises a third hole section, the first hole section being connected between the third hole section and the second hole section;
wherein an end of the third hole section connected to the first hole section is a second junction end, and a hole diameter of the second junction end is equal to or greater than a maximum hole diameter of the first hole section.

5. The end cover according to claim 3, wherein an included angle between the hole wall of the first hole section and the thickness direction of the cover body is a first included angle α, wherein 0°≤α≤45°.

6. The end cover according to any one of claims 1 to 5, wherein the cover body comprises a cover portion and an electrolyte injection platform, the cover portion having a constructional surface, the constructional surface facing away from the interior of the battery cell, the electrolyte injection platform protruding from the constructional surface, and the electrolyte injection hole running through the cover portion and the electrolyte injection platform.

7. The end cover according to claim 6, wherein the electrolyte injection platform has a peripheral side wall, the peripheral side wall surrounding an axial direction of the electrolyte injection hole, and the peripheral side wall being constructed with a rolled-edge groove recessed toward the electrolyte injection hole.

8. The end cover according to claim 7, wherein the cover portion is constructed with an avoidance groove, the avoidance groove being recessed toward the interior of the battery cell, and a bottom surface of the avoidance groove serving as the constructional surface.

9. The end cover according to claim 8, wherein a depth of recess of the rolled-edge groove is a first dimension D1, a width of the rolled-edge groove in the thickness direction is a second dimension D2, a side wall of the avoidance groove opposite a groove bottom of the rolled-edge groove is a first side wall, and in a direction perpendicular to the thickness direction, a distance between the groove bottom of the rolled-edge groove and the first side wall is a third dimension D3;
wherein D1≥0.5 mm, D2≥0.5 mm, 2≥D1/D2≥0.5, and D3≥3D1.

10. The end cover according to any one of claims 1 to 9, wherein the end cover further comprises a baffle, the baffle being disposed on a side of the cover body facing the interior of the battery cell and blocking a flow path of an electrolyte flowing from the electrolyte injection hole to the interior of the battery cell.

11. An end cover assembly applied to a battery cell, wherein the end cover assembly comprises:
the end cover according to any one of claims 1 to 10;
a first sealing member disposed inside the electrolyte injection hole and sealing the first hole section and the second hole section; and
a second sealing member covering a side of the first sealing member facing away from the interior of the battery cell and hermetically connected to the cover body.

12. The end cover assembly according to claim 11, wherein the cover body comprises a cover portion and an electrolyte injection platform, the cover portion having a constructional surface, the constructional surface facing away from the interior of the battery cell, the electrolyte injection platform protruding from the constructional surface, and the electrolyte injection hole running through the cover portion and the electrolyte injection platform;
wherein the second sealing member comprises a first sealing portion and a second sealing portion that are interconnected, the first sealing portion covering the side the first sealing member facing away from the interior of the battery cell, and the second sealing portion being bent relative to the first sealing portion toward the interior of the battery cell and hermetically connected to a peripheral side wall of the electrolyte injection platform.

13. The end cover assembly according to claim 12, wherein the peripheral side wall surrounds an axial direction of the electrolyte injection hole, and the peripheral side wall is constructed with a rolled-edge groove recessed toward the electrolyte injection hole;
wherein the second sealing portion comprises a first rolled-edge section and a second rolled-edge section that are interconnected, the first rolled-edge section being connected to the first sealing portion and bent relative to the first sealing portion toward the interior of the battery cell, the first rolled-edge section being hermetically connected to the peripheral side wall, and the second rolled-edge section being bent relative to the first rolled-edge section toward the electrolyte injection hole and being hermetically connected to the rolled-edge groove.

14. The end cover assembly according to any one of claims 11 to 13, wherein the second sealing member comprises a hot melt layer and a thermal conductive layer that are stacked, the hot melt layer being located between the thermal conductive layer and the cover body, and the hot melt layer being thermally meltable to hermetically connect the thermal conductive layer and the cover body.

15. The end cover assembly according to any one of claims 11 to 14, wherein the first sealing member comprises a main body portion and a positioning portion that are adjacent to each other in the thickness direction, the main body portion being hermetically connected to the inside of the electrolyte injection hole, and the positioning portion being located outside the electrolyte injection hole and lapped over a surface of the cover body facing away from the interior of the battery cell;
wherein the second sealing member hermetically covers the positioning portion.

16. The end cover assembly according to claim 15, wherein the first sealing member further comprises a limiting portion located outside the electrolyte injection hole, the main body portion being connected between the limiting portion and the positioning portion, and the limiting portion abutting against a surface of the cover body facing the interior of the battery cell.

17. A battery cell, comprising:
a housing enclosing an accommodating cavity having an opening;
an electrode assembly accommodated in the accommodating cavity; and
the end cover assembly according to any one of claims 11 to 16; wherein the end cover assembly covers the opening.

18. A battery, comprising the battery cell according to claim 17.

19. An electric apparatus, comprising the battery according to claim 18, wherein the battery is configured to supply electrical energy.
